# EUROPÄISCHE PATENTSCHRIFT

(11) **EP 1 443 100 B1**
(45) Veröffentlichungstag und Bekanntmachung des Hinweises auf die Patenterteilung: **05.09.2007**
(21) Anmeldenummer: 03026620.9
(22) Anmeldetag: 19.11.2003
(51) Int. Cl.: C12M 1/00, B65G 1/137

(54) **Klimaschrank sowie Vorrichtung und Verfahren zu seiner Überwachung**
Climatic cabinet as well as device and method of monitoring the same
Armoire de climatisation ainsi que dispositif et méthode de sa surveillance

(30) Priorität: 02.02.2003 DE 10304171
(43) Veröffentlichungstag der Anmeldung: 04.08.2004
(73) Patentinhaber: Thermo Electron LED GmbH, 63505 Langenselbold (DE)
(72) Erfinder: Melching, Achim, 63505 Langenselbold (DE); Reinhardt, Heiko, 63456 Hanau (DE); Dick, Thorsten, 36039 Fulda (DE); Betz, Stefan, 63526 Erlensee (DE)
(74) Vertreter: Lang, Friedrich

(56) Entgegenhaltungen:
- EP-A- 1 155 743
- FR-A- 2 820 144
- PATENT ABSTRACTS OF JAPAN Bd. 0070, Nr. 37 (M-193), 15. Februar 1983 (1983-02-15) & JP 57 189901 A (ZENERARU KK), 22. November 1982 (1982-11-22)
- DATABASE WPI Week 199612 Derwent Publications Ltd., London, GB; AN 1996-112133 XP002283549 & JP 08 012027 A ((CKDC) CKD KK) 16. Januar 1996 (1996-01-16)
- PATENT ABSTRACTS OF JAPAN Bd. 2000, Nr. 12, 3. Januar 2001 (2001-01-03) & JP 2000 241067 A (KOBAYASHI KUNIHIKO), 8. September 2000 (2000-09-08)
- PATENT ABSTRACTS OF JAPAN Bd. 2000, Nr. 22, 9. März 2001 (2001-03-09) & JP 2001 122410 A (SUN S KK; NAGAI SANAE; YAMADA KO; NIPPON FILING CO LTD), 8. Mai 2001 (2001-05-08)
- PATENT ABSTRACTS OF JAPAN & JP 2000 093157 A (MATSUSHITA ELECTRIC IND. CO. LTD), 4. April 2000 (2000-04-04)

## Beschreibung

Die Erfindung betrifft einen Klimaschrank mit Objektlagerplätzen sowie einer Transportvorrichtung und einer Überwachungsvorrichtung für Objektträger. Die Erfindung betrifft ferner eine Vorrichtung und ein Verfahren zur Überwachung eines Klimaschranks.

Ein derartiger Klimaschrank ist aus EP-A2-1155743 bekannt. Eine übliche Anwendung ist die zeitweise Lagerung von Objektträgern, typischerweise sogenannte Mikrotiterplatten (MTP), unter vorgegebenen klimatischen Bedingungen zu Forschungszwecken und die Anwendung in der industriellen Fertigung. Die Bestückung und Entnahme der Objektträger erfolgt einzeln über eine kleine Transferöffnung mit Hilfe einer automatischen Transportvorrichtung. Hierbei wird der Objektträger mit einer Schaufel oder einem Greifer erfasst und mittels eines Lifts und einem horizontal verschwenkbaren Arm von und zu den einzelnen Objektträger-Lagerplätzen transportiert.

Es ist aus JP-A-2000093157 für Objektträger mit einer Barcode-Markierung auch bekannt, im Bereich der Transferöffnung eine Überwachungsvorrichtung in Form eines Barcode-Lesers vorzusehen, wobei allerdings nur jeweils passierende Objektträger identifiziert werden können. Wenn aber ein bereits an einem Lagerplatz abgelegter Objektträger überprüft werden soll, ist dies nicht ohne weiteres möglich. Zwar sind derartige Klimaschränke mit einer relativ großen Tür versehen, über welche großräumig Zugang zum Innenraum möglich ist. Aus naheliegenden Gründen dürfen sie aber nicht während des Betriebs des Klimaaschranks geöffnet werden.

Der Erfindung liegt die Aufgabe zugrunde, einen Klimaschrank sowie eine Vorrichtung und ein Verfahren der eingangs genannten Art anzugeben, mit welcher im Inneren des Klimaschranks auf einfache Weise eine Überwachung vorgenommen werden kann.

Diese Aufgabe wird vorrichtungsmäßig dadurch gelöst, dass die Überwachungsvorrichtung bezüglich ihrer Form und Außenabmessungen so gestaltet ist, dass sie vom Transportsystem transportiert und an einem der Objektlagerplätze abgelegt sowie von einem Objektlagerplatz entnommen werden kann.

Ein Grundgedanke der Erfindung besteht demnach darin, die Überwachungsvorrichtung kompatibel mit einem Objektträger zu gestalten, so dass sie wie ein Objektträger mit den bereits vorhandenen und installierten Mitteln gehandhabt und transportiert werden kann. Das hat den Vorteil, dass sie mit der bereits vorhandenen Transportvorrichtung an jeden Ort bewegt werden und in verschiedene horizontale Winkelstellungen verschwenkt werden kann. Damit können nicht nur einzelne Objektträger an ihren Lagerplätzen erreicht und überwacht werden, sondern auch Objektträgerkassetten, feststehende und bewegliche Lagervorrichtungen in Ruhestellung und im Betrieb, wie Kassettenträger-Karusselle, und nicht zuletzt Teile der Transportvorrichtung selbst. Ein weiterer Vorteil besteht darin, dass die Befüllung des Klimaschranks mittels Objektträgerkassetten anstelle einer Einzelbefüllung erfolgen kann, und anschließend eine einfache Identifizierung der eingebrachten Objektträger erfolgen kann.

Eine bevorzugte Weiterbildung der Erfindung besteht darin, dass ein Objektlagerplatz zur Lagerung der Überwachungsvorrichtung an der Außenseite des Klimaschranks angebracht ist. Somit wird die Überwachungsvorrichtung nicht ständig dem Klima im Klimaschrank ausgesetzt, was die Lebensdauer und Funktionssicherheit erhöht. Außerdem wird die Wartung erleichtert.

Es ist besonders zweckmäßig, dass eine drahtlose Daten-Übertragungsstrecke zur Überwachungsvorrichtung vorhanden ist, und dass sie bevorzugt für eine Funkübertragung oder eine Infrarot-Übertragung ausgelegt ist. Nach einer bevorzugten Ausgestaltung der Erfindung weist die Überwachungsvorrichtung hierzu mit einen Sender und/ oder einen Empfänger auf.

Für einen Betrieb mit drahtloser Übertragung ist es ferner vorteilhaft, dass der zur Lagerung der Überwachungsvorrichtung vorgesehene Objektlagerplatz eine stationäre Datenübertragungsschnittstelle und/ oder eine Akku-Ladestation aufweist, und das die Überwachungsvorrichtung mit Gegenstücken dieser Schnittstellen sowie mit einem Datenspeicher zur Zwischenlagerung von ermittelten Daten versehen ist.

Abhängig von den durchzuführenden Identifizierungen und Überwachungen ist es zweckmäßig, dass die Überwachungsvorrichtung als Detektor einen Barcode-Leser, eine Bildkamera oder einen induktiven Sensor aufweist. Mit einer Bildkamera ist es zum Beispiel auch möglich, leere Objektlagerplätze zu überprüfen oder Objektträger mit unvollständigen oder fehlenden Barcodes zu identifizieren.

Verfahrensmäßig wird die Aufgabe dadurch gelöst, dass die Überwachungsvorrichtung in einem Ruhemodus an einem Objektlagerplatz abgelegt ist, dass sie in einem Betriebsmodus von der Transportvorrichtung vom Objektlagerplatz entnommen und an den zu überwachenden Ort bewegt wird, und dass sie anschließend von der Transportvorrichtung an einem Objektlagerplatz abgelegt wird.

Ein besonders zuverlässiger Betrieb wird dadurch erzielt, dass für den Ruhemodus der mit stationärer Datenübertragungsschnittstelle und/ oder Akku-Ladestation ausgerüstete Objektlagerplatz verwendet wird.

Eine Zeit- und Wegoptimierung der Transportvorrichtung kann dadurch erricht werden, dass die Überwachungsvorrichtung an einem aktuell nächstliegenden freien Objektlagerplatz zwischengelagert wird. Das hat den Vorteil, dass der Transport von Objektträgern mit möglichst kurzen Unterbrechungen durchgeführt werden kann.

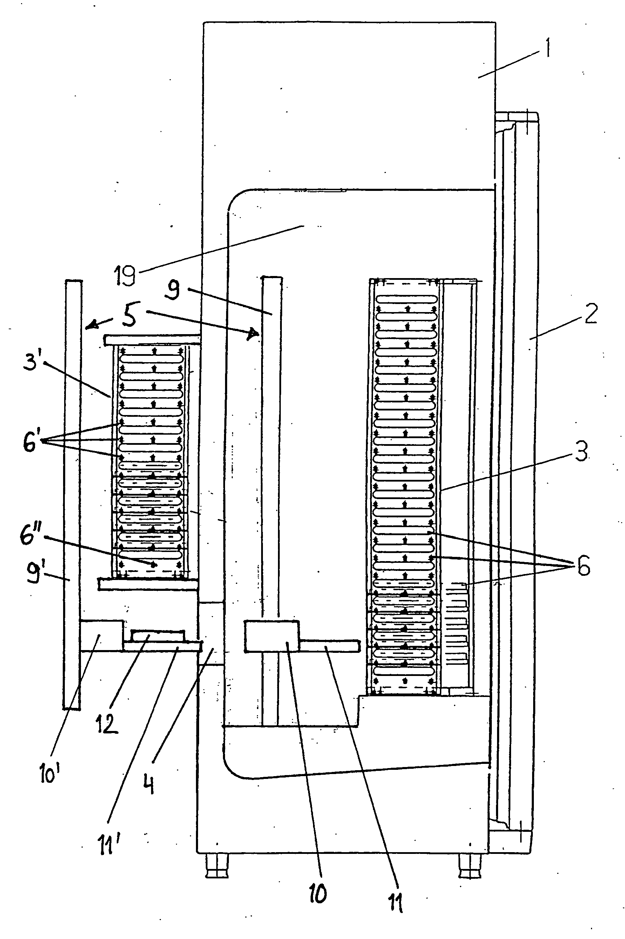

Nachfolgend wir die Erfindung anhand eines in der Zeichnung dargestellten Ausführungsbeispiels weiter erläutert.

Die einzige Figur zeigt schematisch einen Teil-Längsschnitt durch einen Klimaschrank.

Der in der Figur veranschaulichte Klimaschrank 1 weist eine großflächige Service-Tür 2 zu einem Nutzraum 19 auf, durch welche Objektlagerstationen 3 montiert und entnommen werden können und durch welche Wartungsarbeiten u.ä. möglich sind. In der gegenüberliegenden Wand des Klimaschranks 1 ist eine Transferöffnungen 4 vorhanden, durch die mittels einer Transportvorrichtung 5 Objektträger in den Klimaschrank 1 und in die Objektlagerstationen 3 eingebracht und aus ihnen entnommen werden können. Jede Objektlagerstation umfasst eine Veilzahl von Objektlagerplätzen 6.

An einer Außenseite des Klimaschranks ist eine weitere, außenliegende Objektlagerstation 3' mit weiteren Objektlagerplätzen 6' angebracht. Es besteht eine Transportverbindung zwischen den außenliegenden Objektlagerplätzen 6' der außenliegende Objektlagerstation 3' und den innenliegenden Objektlagerplätzen 6 der innenliegenden Objektlagerstationen 3.

Die Transportvorrichtung 5 umfasst einen außenliegenden Teil 7 und einen innenliegenden Teil 8 jeweils mit einem Lift 9, 9' mit daran angeordnete Horizontal-Verschiebeeinheit 10, 10' sowie einem Greifer oder einer Schaufel 11, 11'. Die Schaufeln 11, 11' erfassen einen Objektträger beim Herausnehmen aus einem Objektlagerplatz 6, 6' und tragen ihn während des Transports zu und von den Objektlagerplätzen 6, 6'. Mir einer nicht dargestellten Übergabevorrichtung erfolgt eine Umladung von einer Schaufel 11 zur anderen 11' beim Übergang zwischen dem inneren und äußeren Teil 7, 8 der Transportvorrichtung 5.

In der dargestellten Situation trägt die Schaufel 11' eine Überwachungsvorrichtung 12, die bezüglich ihrer Form und Außenabmessungen so gestaltet ist, dass sie kompatibel mit einem Objektträger von der Transportvorrichtung 5 transportiert und an einem der Objektlagerplätze 6, 6' abgelegt sowie von einem Objektlagerplatz 6, 6' entnommen werden kann. Als Sensor ist die Überwachungsvorrichtung 12 beispielsweise mit einem Barcode-Leser, einer Bildkamera oder einem induktiven Sensor ( nicht dargestellt) ausgerüstet. Mit der Transportvorrichtung 5 kann die Überwachungsvorrichtung 12 in der gleichen Weise wie ein üblicher Objektträger an jeden Objektlagerplatz 6, 6' verfahren werden, um den Ort oder einen dort abgelegten Objektträger oder die Objektlagerstation 3 u.ä. zu überprüfen. Mess- und Steuersignale werden dabei drahtlos an einen Empfänger ( nicht dargestellt ) übertragen. Alternativ oder zusätzlich können Messdaten auch in einem Datenspeicher der Überwachungsvorrichtung gespeichert und an einer stationären Schnittstelle ausgelesen werden.

Ein ausgewählter Objektlagerplatz 6" der außenliegenden Objektlagerstation 3' ist als Lagerplatz für die Überwachungsvorrichtung 12 in einem Ruhemodus eingerichtet. Er weist die Datenübertragungsschnittstelle sowie eine Akkuladestation ( nicht dargestellt ) für die Überwachungsvorrichtung 12 auf. Nach Beendigung eines Überwachungsvorgangs legt die Transportvorrichtung 5 die Überwachungsvorrichtung 12 an diesem ausgewählten Objektlagerplatz 6" ab. Falls es zur Zeit- und Wegoptimierung zweckmäßig ist, wenn einer der vorhandenen Objektträger transportiert werden muss, kann die Überwachungsvorrichtung 12 vorrübergehend an irgend einem freien Objektlagerplatz 6, 6' zwischengelagert werden.

Eine nicht dargestellte Steuereinheit ordnet alle Identifizierungsmerkmale der Objektträger den jeweiligen Objektlagerplätze 6, 6', 6" zu, koordiniert den Transportweg und die jeweilige Position der Transportvorrichtung 5 und führt die Zuordnung und Auswertung der Überprüfungsergebnisse etc. durch.

## Patentansprüche

1. Klimaschrank mit Objektlagerplätzen sowie einer Transportvorrichtung und einer Überwachungsvorrichtung für Objektträger, **dadurch gekennzeichnet, dass** die Überwachungsvorrichtung bezüglich ihrer Form und Außenabmessungen so gestaltet ist, dass sie vom Transportsystem transportiert und an einem der Objektlagerplätze abgelegt sowie von einem Objektlagerplatz entnommen werden kann.

2. Klimaschrank nach Anspruch 1, **dadurch gekennzeichnet, dass** ein Objektlagerplatz zur Lagerung der Überwachungsvorrichtung an der Außenseite des Klimaschranks angebracht ist.

3. Klimaschrank nach Anspruch 1 oder 2, **dadurch gekennzeichnet, dass** der zur Lagerung der Überwachungsvorrichtung vorgesehene Objektlagerplatz eine stationäre Datenübertragungsschnittstelle und/ oder eine Akku-Ladestation aufweist.

4. Klimaschrank nach einem der vorhergehenden Ansprüche, **dadurch gekennzeichnet, dass** eine drahtlose Daten-Übertragungsstrecke zur Überwachungsvorrichtung vorhanden ist.

5. Klimaschrank nach Anspruch 4, **dadurch gekennzeichnet, dass** die drahtlose Daten-Übertragungsstrecke für eine Funkübertragung oder eine Infrarot-Übertragung ausgelegt ist.

6. Überwachungsvorrichtung für einen Klimaschrank nach Anspruch 1, **dadurch gekennzeichnet, dass** sie bezüglich ihrer Form und Außenabmessungen so gestaltet ist, dass sie vom Transportsystem transportiert und an einem der Objektlagerplätze abgelegt sowie von einem Objektlagerplatz entnommen werden kann.

7. Gegenstand nach einem der vorhergehenden Ansprüche, **dadurch gekennzeichnet, dass** die Überwachungsvorrichtung ein Gegenstück zur stationären Datenübertragungsschnittstelle bzw. der Akku-Ladestation aufweist.

8. Gegenstand nach Anspruch 7, **dadurch gekennzeichnet, dass** die Überwachungsvorrichtung einen Sender und/ oder einen Empfänger aufweist.

9. Gegenstand nach Anspruch 7, **dadurch gekennzeichnet, dass** die Überwachungsvorrichtung als Detektor einen Barcode-Leser, eine Bildkamera oder einen induktiven Sensor aufweist.

10. Verfahren zur Überprüfung eines Objekts in einer Klimakammer nach Anspruch 1, **dadurch gekennzeichnet, dass** die Überwachungsvorrichtung in einem Ruhemodus an einem Objektlagerplatz abgelegt ist, dass sie in einem Betriebsmodus von der Transportvorrichtung vom Objektlagerptatz entnommen und an den zu überwachenden Ort bewegt wird, und dass sie anschließend von der Transportvorrichtung an einem Objektlagerplatz abgelegt wird.

11. Verfahren nach Anspruch 10, **dadurch gekennzeichnet, dass** für den Ruhemodus der mit stationärer Datenübertragungsschnittstelle und/ oder Akku-Ladestation ausgerüstete Objektlagerplatz verwendet wird.

12. Verfahren nach Anspruch 10 oder 11, **dadurch gekennzeichnet, dass** die Überwachungsvorrichtung an einem aktuell nächstliegenden freien Objektlagerplatz zwischengelagert wird.

## Claims

1. Climactic cabinet with specimen storage places and a transporting device and a monitoring device for specimen carriers, **characterised in that** the monitoring device is designed, with regard to its shape and outside dimensions, in such a way that it can be transported by the transporting system and laid on one of the specimen storage places and can be removed from a specimen storage place.

2. Climatic cabinet according to Claim 1, **characterised in that** a specimen storage place for the storage of the monitoring device is affixed to the outside of the climatic cabinet.

3. Climatic cabinet according to Claim 1 or 2, **characterised in that** the specimen storage place, provided for the storage of the monitoring device, has a stationary data transmission interface and/or a storage-battery-loading station.

4. Climatic cabinet according to one of the previous claims, **characterised in that** a wireless data transmission path is present for the monitoring device.

5. Climatic cabinet according to Claim 4, **characterised in that** the wireless data transmission path is designed for a radio transmission or an infrared transmission.

6. Monitoring device for a climatic cabinet according to Claim 1, **characterised in that** it is designed, with regard to its shape and outside dimensions, so that it can be transported by the transporting system and laid on one of the specimen storage places and can be removed from a specimen storage place.

7. Subject matter according to one of the previous claims, **characterised in that** the monitoring device has a counterpart for the stationary data transmission interface or the storage battery-loading station.

8. Subject matter according to Claim 7, **characterised in that** the monitoring device has a sender and/or a receiver.

9. Subject matter according to Claim 7, **characterised in that** the monitoring device has, as a detector, a barcode reader, a photographic camera, or an inductive sensor.

10. Method for the examination of a specimen in a climatic chamber according to Claim 1, **characterised in that** the monitoring device is laid on a specimen storage place in a resting mode, that it is removed from the specimen storage place in an operating mode by the transporting device and is moved to the site to be monitored, and that it is subsequently laid on a specimen storage place by the transporting device.

11. Method according to Claim 10, **characterised in that** the specimen storage place, equipped with stationary data transmission interface and/or battery storage-loading station, is used for the resting mode.

12. Method according to Claim 10 or 11, **characterised in that** monitoring device is placed, for intermediate storage, on a free specimen storage place, which is closest at the time.

## Revendications

1. Armoire climatique avec des emplacements d'objet et un dispositif de transport et avec un dispositif de surveillance pour des porte-objets, **caractérisée en ce que** le dispositif de surveillance a une forme et des dimensions extérieures telles qu'il peut être transporté par le système de transport et déposé dans l'un des emplacements d'objet et retiré d'un emplacement d'objet.

2. Armoire climatique selon la revendication 1, **caractérisé en ce qu'**un emplacement d'objet destiné au rangement du dispositif de surveillance est disposé sur la face extérieure de l'armoire climatique.

3. Armoire climatique selon la revendication 1 ou 2, **caractérisé en ce que** l'emplacement d'objet destiné au rangement du dispositif de surveillance possède une interface stationnaire de transmission de données et/ou un poste de chargement d'accumulateurs.

4. Armoire climatique selon l'une des revendications précédentes, **caractérisée en ce qu'**il est prévu une voie de transmission de données sans fil vers le dispositif de surveillance.

5. Armoire climatique selon la revendication 4, **caractérisé en ce que** la voie de transmission de données sans fil est conçue en vue d'une transmission par radio ou d'une transmission par infrarouges.

6. Dispositif de surveillance pour une armoire climatique selon la revendication 1, **caractérisé en ce que** sa forme et ses dimensions sont telles qu'il peut être transporté par le système de transport et déposé dans l'un des emplacements d'objet et retiré d'un emplacement d'objet.

7. Objet selon l'une des revendications précédentes, **caractérisé en ce que** le dispositif de surveillance possède un élément correspondant à l'interface stationnaire de transmission de données ou au poste de chargement d'accumulateurs.

8. Objet selon la revendication 7, **caractérisé en ce que** le dispositif de surveillance comprend un émetteur et/ou un récepteur.

9. Objet selon la revendication 7, **caractérisé en ce que** le dispositif de surveillance possède comme détecteur un lecteur de code à barres, une caméra vidéo ou un capteur à induction.

10. Procédé pour le contrôle d'un objet dans une armoire climatique selon la revendication 1, **caractérisé en ce que** le dispositif de surveillance est déposé en mode de repos sur un emplacement d'objet, **en ce que** dans un mode de fonctionnement, il est retiré par le dispositif de transport de l'emplacement d'objet et déplacé jusqu'à l'objet à surveiller, et **en ce qu'**il est ensuite déposé par le dispositif de transport sur un emplacement d'objet.

11. Procédé selon la revendication 10, **caractérisé en ce que** pour le mode de repos, c'est l'emplacement d'objet équipé de l'interface stationnaire de transmission de données et/ou du poste de chargement d'accumulateurs qui est utilisé.

12. Procédé selon la revendication 10 ou 11, **caractérisé en ce que** le dispositif de surveillance est entreposé s
